# EUROPEAN PATENT APPLICATION

(11) **EP 2 187 627 A2**
(43) Date of publication of application: **19.05.2010**
(21) Application number: 09007472.5
(22) Date of filing: 05.06.2009
(51) Int. Cl.: H04N 5/445, H04N 5/76

(54) **Recorder and recording method thereof**

(30) Priority: 12.11.2008 JP 2008290317
(71) Applicant: Kabushiki Kaisha Toshiba, Minato-ku, Tokyo 105-8001 (JP)
(72) Inventor: Nakajima, Yumiko, Tokyo 105-8001 (JP); Yoshida, Osamu, Tokyo 105-8001 (JP)
(74) Representative: HOFFMANN EITLE

(57) **Abstract**

According to one embodiment, a recorder (100; 700) includes a program display module (112), a processing module (118; 701), and an information display module (117a; 703a). The program display module (112) displays a program guide that provides program information indicating programs from multiple channels broadcast during respective time periods, content data of which can be simultaneously recorded. The content data of the programs is received through a plurality of tuners (102, 103, 104, 110). Pieces of the program information are arranged in time series with respect to each of the channel in the program guide. The processing module (118; 701) performs predetermined processing on the content data of the programs. The information display module (117a; 703a) displays processing information related to the predetermined processing when the program guide includes at least one of program information indicating a program on which the processing module (118; 701) is performing the predetermined processing and program information indicating a program on which the processing module (118; 701) has performed the predetermined processing. The processing information is displayed correspondingly to the program information.

## Description

### BACKGROUND

### 1. Field

One embodiment of the invention relates to a recorder configured to simultaneously record content data of programs from multiple channels, and a recording method thereof.

### 2. Description of the Related Art

In recent years, commonly used recorders are provided with a large capacity storage device such as a hard disk drive (HDD) and have various functions. For example, such a recorder has the function of simultaneously recording the content data of programs from multiple channels using a plurality of tuners and that of reproducing or displaying the content data of a program while recording the program or the content data of a program that has already been recorded while recording another program. Among the recorders, there are those capable of displaying a program guide that provides program information indicating programs that can be simultaneously recorded. In the program guide, pieces of the program information are arranged in time series with respect to each channel. This conventional technology is disclosed in, for example, Japanese Patent Application Publication (KOKAI) No. 2007-243302, and also "Program Navigator," [online] [retrieved on 12 November 2008], the Internet <URL: http://www.roy.hi-ho.ne.jp/masao/rd/yoyaku.html>.

When a recorder, which is capable of displaying a program guide, performs predetermined processing such as reproduction, deletion, and recording of content data of a program, recording of a program on another recorder, or scheduled recording of a program, in addition to information on the relevant program, it is required to provide information on predetermined processing in progress or already completed such as the broadcast time of a program being reproduced, a program of which content data is to be deleted, and a program recorded or scheduled to be recorded.

With the conventional technology described above, the program guide provides program information in the same manner for programs therein regardless of whether predetermined processing is in progress or already completed on the content data of the programs. As a result, a user cannot distinguish between processing in progress and processing already completed from the program guide.

It is therefore an object of the invention to provide a recorder capable of providing, through a program guide, processing information related to predetermined processing which is currently performed or has been performed on content data of a program indicated by program information, and recording method thereof.

### SUMMARY OF THE INVENTION

To overcome the problems and achieve the object mentioned above, according to an aspect of the invention, a recorder comprises a program display module, a processing module, and an information display module. The program display module is configured to display a program guide that provides program information indicating programs from multiple channels broadcast during respective time periods, content data of which can be simultaneously recorded. The content data of the programs is received through a plurality of tuners. Pieces of the program information are arranged in time series with respect to each of the channel in the program guide. The processing module is configured to perform predetermined processing on the content data of the programs. The information display module is configured to display processing information related to the predetermined processing when the program guide displayed by the program display module includes at least one of first program information indicating a program on which the processing module is performing the predetermined processing and second program information indicating a program on which the processing module has performed the predetermined processing. The processing information is displayed correspondingly to at least one of the first program information and the second program information in the program guide.

According to another aspect of the invention, a recorder comprises a program display module and an information display module. The program display module is configured to display a program guide that provides program information indicating programs from multiple channels broadcast during respective time periods, content data of which can be simultaneously recorded. The content data of the programs is received through a plurality of tuners. Pieces of the program information are arranged in time series with respect to each of the channel in the program guide. The information display module is configured to display processing information related to predetermined processing when the program guide displayed by the program display module includes at least one of first program information indicating a program on which the predetermined processing is being performed and second program information indicating a program on which the predetermined processing has been performed. The processing information is displayed correspondingly to at least one of the first program information and the second program information in the program guide.

According to still another aspect of the invention, there is provided a recording method comprising: a program display module displaying a program guide that provides program information indicating programs from multiple channels broadcast during respective time periods, content data of which can be simultaneously recorded, the content data of the programs being received through a plurality of tuners, pieces of the program information being arranged in time series with respect to each of the channel in the program guide; a processing module performing predetermined processing on the content data of the programs; and an information display module displaying processing information related to the predetermined processing when the program guide displayed by the program display module includes at least one of first program information indicating a program on which the processing module is performing the predetermined processing and second program information indicating a program on which the processing module has performed the predetermined processing, the processing information being displayed correspondingly to at least one of the first program information and the second program information in the program guide.

As described above, according to an aspect of the invention, program information indicating programs of which content data is undergoing or has undergone predetermined processing can be displayed distinguishably from program information indicating other programs. Thus, it is possible to provide, through a program guide, processing information related to predetermined processing which is currently performed or has been performed on content data of a program indicated by program information.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a multi-channel receiver to which are applied a recorder and a recording method according to a first embodiment of the invention;
FIG. 2 an exemplary detailed block diagram of a tuner in the first embodiment;
FIG. 3 is an exemplary flowchart of a program guide display process in the first embodiment;
FIG. 4 is an exemplary schematic diagram of a program guide displayed on a television in the first embodiment;
FIG. 5 is an exemplary flowchart of a processing information display process in the first embodiment;
FIG. 6 is an exemplary schematic diagram of processing information displayed on a television in the first embodiment;
FIG. 7 is an exemplary block diagram of a multi-channel receiver according to a second embodiment of the invention;
FIG. 8 is an exemplary flowchart of a processing information display process in the second embodiment;
FIG. 9 is an exemplary schematic diagram of processing information displayed on a television in the second embodiment;
FIG. 10 is an exemplary flowchart of a processing information display process according to a modification of the second embodiment; and
FIG. 11 is an exemplary schematic diagram of processing information displayed on a television in the modification.

### DETAILED DESCRIPTION

Various embodiments according to the invention will be described hereinafter with reference to the accompanying drawings.

In the following, while a recorder and a recording method thereof of the embodiments are described as being applied to a multi-channel receiver such as a hard disk drive (HDD) recorder or a hard disk drive/digital versatile disc (HDD/DVD) recorder capable of simultaneously recording content data of programs from multiple channels, this is by way of example and not by way of limitation. For example, the embodiments may be applied to a television receiver which is provided with a liquid crystal display or a plasma display and is capable of simultaneously recording content data of programs from multiple channels on its built-in HDD.

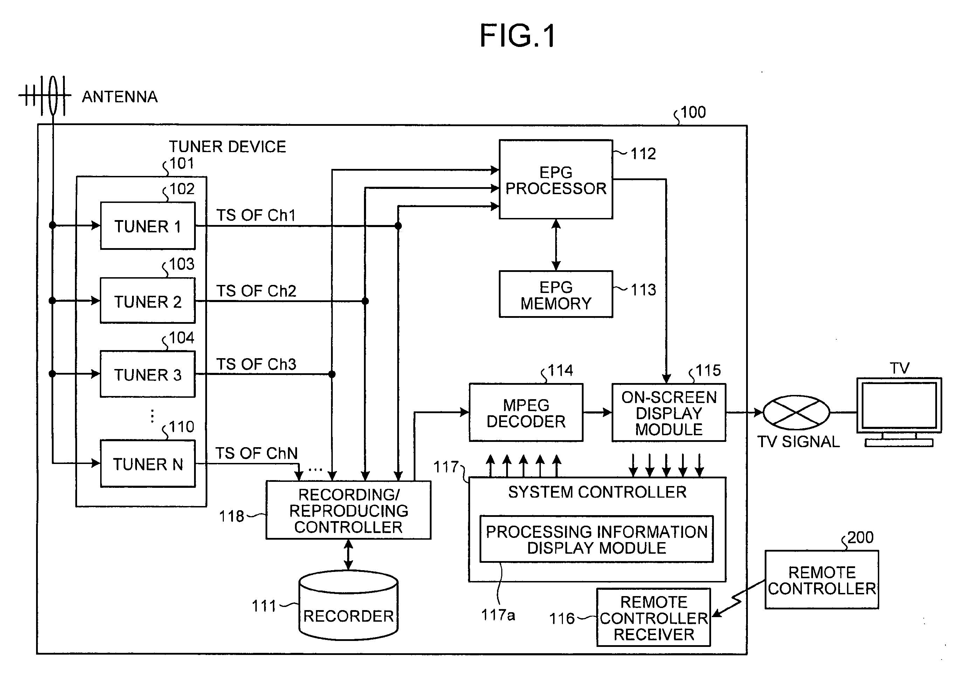

FIG. 1 is a block diagram of a multi-channel receiver 100 to which are applied a recorder and a recording method according to a first embodiment of the invention. The multi-channel receiver 100 of the first embodiment comprises a tuner device 101, a recorder 111, an electronic program guide (EPG) processor 112, an EPG memory 113, a moving picture experts group (MPEG) decoder 114, an on-screen display module 115, a remote controller receiver 116, a system controller 117, and a recording/reproducing controller 118.

The tuner device 101 comprises a plurality of tuners. Through the tuners, the tuner device 101 receives a transport stream of multiplexed content data of a program from each of multiple channels to be simultaneously recorded on the recorder 111 such as HDD. In the first embodiment, the tuner device 101 comprises tuners 102 to 110 to receive N channels Ch1 to ChN. The transport streams of the channels Ch1 to ChN output from the tuners 1 to N (102 to 110) are sent to the EPG processor 112 and the recording/reproducing controller 118.

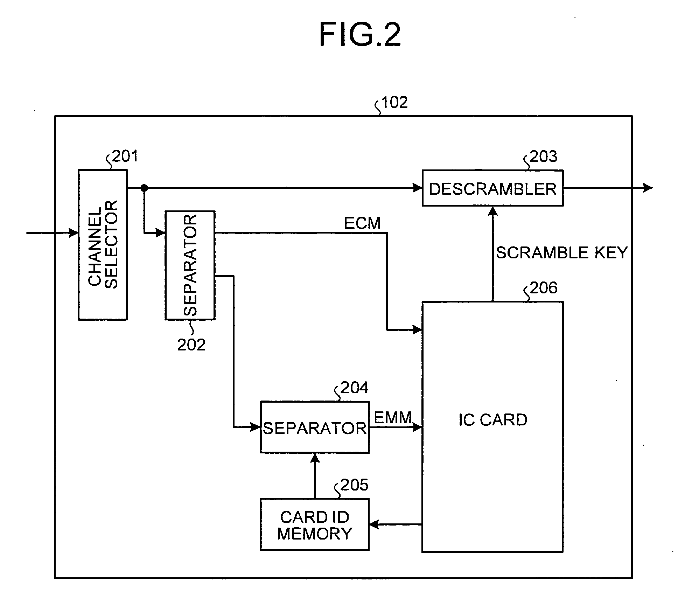

With reference to FIG. 2, a description will be given of a detailed configuration of the tuners 1 to N (102 to 110) of the first embodiment. The tuners 102 to 110 are of like configuration and thus but one of them, for example, the tuner 102 will be described in detail. FIG. 2 a detailed block diagram of the tuner 102.

The tuner 1 (102) comprises a channel selector 201, a separator 202, a descrambler 203, a separator 204, a card ID memory 205, and an IC card 206.

The channel selector 201 selects a channel from antenna input. A transport stream of the selected channel is input to the separator 202 and the descrambler 203. The separator 202 separates control data ECM multiplexed into the transport stream therefrom, and inputs the control data ECM to the IC card 206. Meanwhile, the separator 204 separates control data EMM multiplexed into the transport stream therefrom, and inputs the control data EMM to the IC card 206.

The IC card 206 decodes a scramble key based on the control data ECM and the control data EMM. The descrambler 203 descrambles the content data multiplexed into the transport stream using the scramble key decoded by the IC card 206, and outputs it. Although, in the first embodiment, the IC card 206 is described as being provided to each of the tuners 102 to 110, a plurality of tuners may share one IC card.

Referring back to FIG. 1, the EPG processor 112 extracts EPG information from the transport streams of the channels Ch1 to ChN output from the tuners 102 to 110. The EPG information corresponds to program information (SI information) indicating programs from multiple channels broadcast during respective time periods, content data of which can be simultaneously recorded. The EPG processor 112 stores the EPG information in the EPG memory 113.

The first embodiment describes the case where EPG information is extracted from a transport stream of Japanese digital terrestrial broadcasting channels Ch1 to ChN with respect to each of the channels. However, the first embodiment is not so limited. For example, EPG information of all broadcasting satellite (BS) channels for BS digital broadcasting may be multiplexed into the transport stream of each of the channels. In any case, the EPG processor 112 extracts EPG information for channels that can be received by the multi-channel receiver 100, and stores it in the EPG memory 113.

The EPG processor 112 also retrieves EPG information from the EPG memory 113 in response to the depression of a program guide button, etc. on a remote controller 200. The EPG processor 112 thereby feeds program guide data on a program guide to the on-screen display module 115 to display the program guide on a television. In the program guide, pieces of the EPG information are arranged in time series with respect to each channel. Upon extracting EPG information from the transport streams of the channels Ch1 to ChN, the EPG processor 112 updates EPG information stored in the EPG memory 113 with the newly extracted EPG information so that the EPG memory 113 always stores update EPG information.

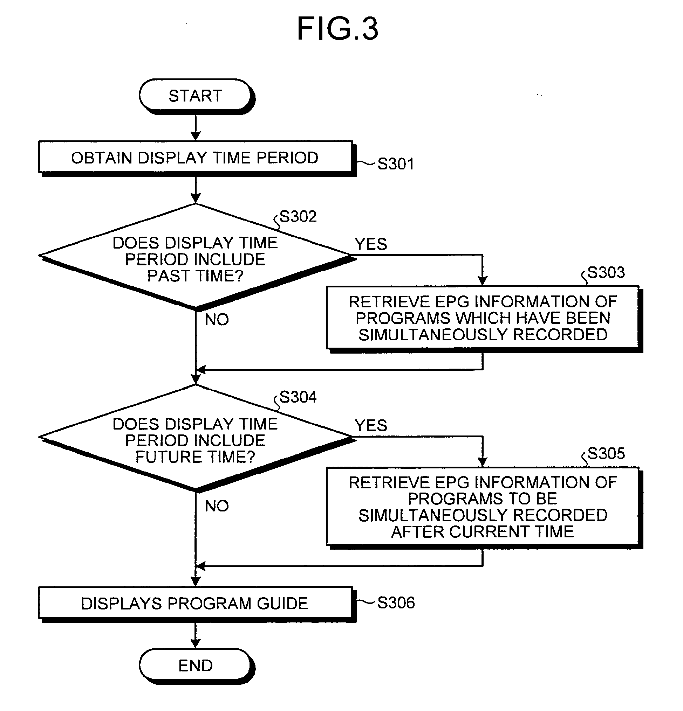

With reference to FIG. 3, a description will now be given of a program guide display process performed by the EPG processor 112. FIG. 3 is a flowchart of the program guide display process.

When the program guide button on the remote controller 200 is pressed or an instruction is input through the remote controller 200, while a program guide is displayed, to display a program guide for another time period, the EPG processor 112 obtains the time period (hereinafter, "display time period") of EPG information to be contained in the program guide (S301). For example, when the program guide button is pressed, the EPG processor 112 obtains a time period from a predetermined time before the current time until a predetermined time after the current time as the display time period. On the other hand, upon receipt of a request, while a program guide is displayed, to display a program guide for another time period, the EPG processor 112 obtains a time period from a predetermined time before the time specified through the remote controller 200 until a predetermined time after the specified time as the display time period.

The EPG processor 112 then determines whether the display time period includes the time before the current time, i.e., the past time (S302). If determining that the display time period includes the past time (Yes at S302), the EPG processor 112 retrieves EPG information of programs broadcast during respective time periods, content data of which have been simultaneously recorded (S303).

On the other hand, if determining that the display time period does not include the past time (No at S302), or after retrieving the EPG information at S303, the EPG processor 112 determines whether the display time period includes the time after the current time, i.e., the future time (S304). If determining that the display time period includes the future time (Yes at S304), the EPG processor 112 retrieves EPG information of programs broadcast during respective time periods to be simultaneously recorded after the current time (S305).

After that, the EPG processor 112 displays a program guide on a television (S306). In the program guide, among pieces of the retrieved EPG information, pieces of EPG information of programs broadcast during the display time period are arranged in time series with respect to each channel.

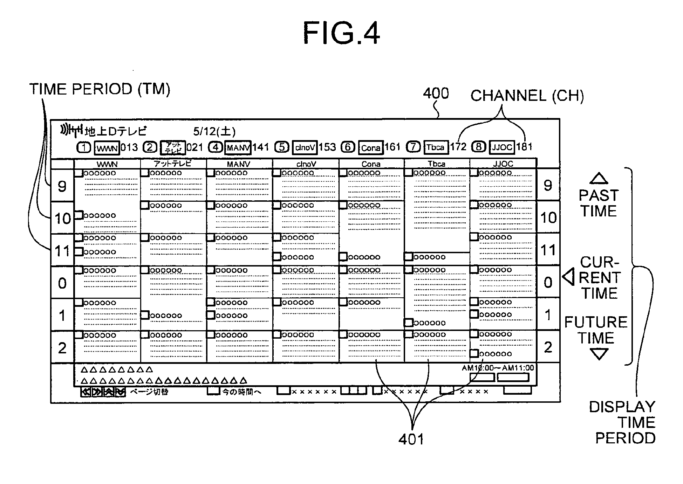

FIG. 4 illustrates an example of the program guide displayed on the television. When the program guide button is pressed, the EPG processor 112 displays a program guide 400 on the television. As illustrated in FIG. 4, in the program guide 400, pieces of EPG information 401 of programs broadcast during respective time periods (TM) within the display time period are arranged in time series with respect to each channel (CH). The display time period includes the past time and the future time taking the current time as a reference.

Referring back to FIG. 1, the recording/reproducing controller 118 performs predetermined processing on content data multiplexed into the transport streams of the channels Ch1 to ChN. In the first embodiment, the recording/reproducing controller 118 selects, according to a control signal from the system controller 117, content data multiplexed into a transport stream received from the tuners 102 to 110 or content data recorded on the recorder 111. The recording/reproducing controller 118 outputs the selected content data to the MPEG decoder 114, thereby reproducing the content data.

Upon extracting content data from a transport stream, the recording/reproducing controller 118 adds identification information that identifies the content data thereto, and records the content data on the recorder 111 with the identification information. The identification information includes, for example, channel information indicating a channel on which a program corresponding to the content data is recorded, the title of the program, the recording date on which the content data is recorded, the reproduction history of the content data, and the like.

The MPEG decoder 114 performs MPEG-2 decoding on the content data received from the recording/reproducing controller 118. The MPEG decoder 114 then outputs the decoded content data to the on-screen display module 115.

The on-screen display module 115 feeds the program guide data received from the EPG processor 112 and the content data received from the MPEG decoder 114 to the television as a television (TV) signal.

The system controller 117 controls the overall operation of the multi-channel receiver 100. More specifically, the system controller 117 performs such processing as to output a control signal to the recording/reproducing controller 118, and to display processing information related to predetermined processing performed on content data.

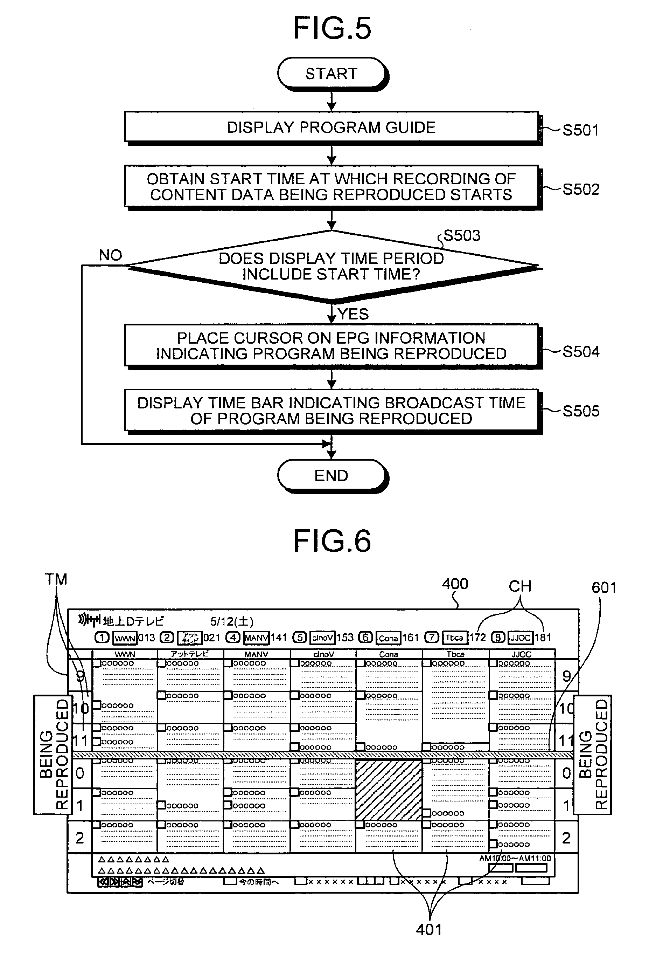

With reference to FIGS. 1, 5 and 6, a description will then be given of a specific functional configuration of the system controller 117 and the process of displaying the processing information (hereinafter, "processing information display process") performed by the system controller 117. FIG. 5 is a flowchart of the processing information display process. FIG. 6 illustrates an example of the processing information displayed on the television.

The system controller 117 that performs the processing information display process comprises a processing information display module 117a. Incidentally, the processing information display module 117a may be provided independently of the system controller 117.

When the EPG processor 112 displays a program guide on the television (S501), the processing information display module 117a obtains the start time at which the recording of content data starts based on the recording date contained in the identification information added to the content data being reproduced by the recording/reproducing controller 118 (S502).

Thereafter, the processing information display module 117a determines whether the display time period of the program guide displayed on the television includes the start time thus obtained (S503) . If determining that the display time period includes the start time (Yes at S503), i.e., if the program guide displayed on the television includes at least either one of EPG information indicating a program corresponding to the content data being reproduced and EPG information indicating a program corresponding to the content data having already been reproduced, the processing information display module 117a places a cursor on the EPG information (S504). The cursor represents the processing information related to reproduction.

Then, the processing information display module 117a sends data on a time bar 601 to the on-screen display module 115 to display the time bar 601 on the television (S505). As illustrated in FIG. 6, the time bar 601 is displayed above the EPG information indicating the program being reproduced (indicated by diagonal lines) and EPG information for programs of other channels broadcast during the same time period as the reproduced program. The time bar 601 represents the processing information related to reproduction and indicates the broadcast time of the program being reproduced or the time period of the EPG information.

While, in the first embodiment, the cursor and the time bar 601 are displayed as the processing information, the processing information is not limited to them, and it may be displayed in any manner or may be any item that can be displayed with EPG information indicating a program being reproduced. For example, a field, in which is displayed EPG information that indicates a program being reproduced, may be displayed in a different color from other fields. Alternatively, an alert may be displayed adjacent to EPG information that indicates a program being reproduced.

As described above, according to the first embodiment, a cursor is placed on EPG information indicating a program being reproduced. In addition, the time bar 601 is displayed above the EPG information indicating the program being reproduced and EPG information for programs of other channels broadcast during the same time period as the reproduced program. The time bar 601 indicates the broadcast time of the program being reproduced or the time period of the EPG information. Thus, the EPG information indicating the program being reproduced is displayed so that it can be distinguished from EPG information indicating other programs. This clarifies the time period in which the program being reproduced is recorded. As a result, the information on processing related to reproduction being performed, such as the time period in which a program being reproduced is recorded, can be easily obtained from the program guide 400.

According to a second embodiment of the invention, a multi-channel receiver displays processing information related to deletion of content data from the recorder 111. The multi-channel receiver of the second embodiment is of basically similar configuration and operates in a similar manner to that of the first embodiment, and therefore, only the difference will be described without repeating the same description.

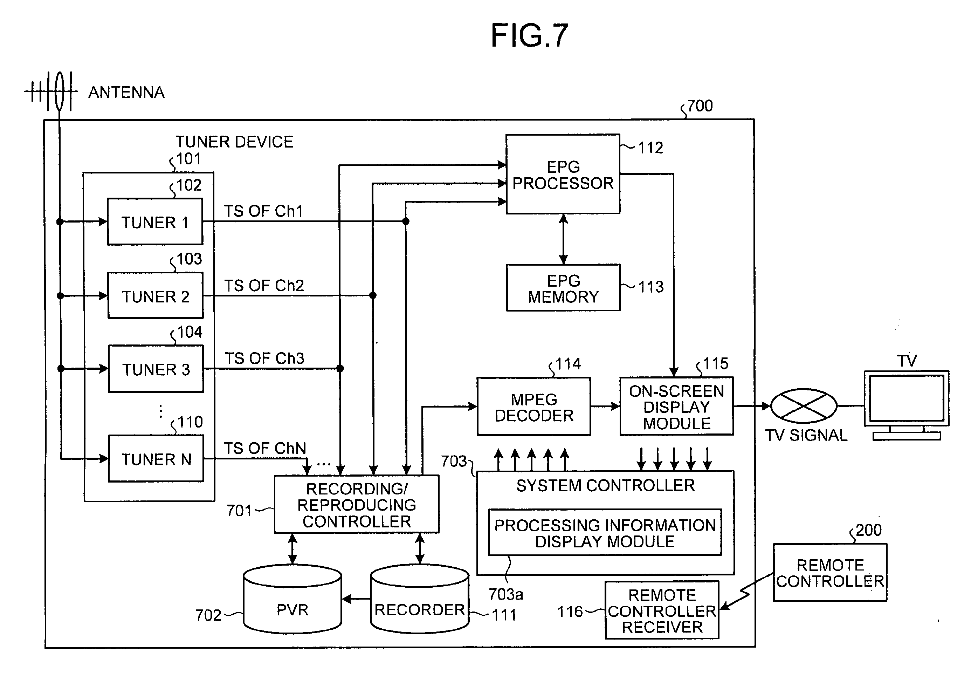

FIG. 7 is a block diagram of a multi-channel receiver 700 according to the second embodiment. Differently from the multi-channel receiver 100 of the first embodiment, the multi-channel receiver 700 of the second embodiment comprises a system controller 703 and a recording/reproducing controller 701 in place of the system controller 117 and the recording/reproducing controller 118. The multi-channel receiver 700 further comprises a personal video recorder (PVR) 702.

When the recorder 111 is running short of available memory capacity and cannot record new content data, the recording/reproducing controller 701 deletes content data from the recorder 111. At this time, the recording/reproducing controller 701 deletes content data from the least recently recorded one based on the recording date contained in the identification information.

Besides, according to a control signal indicating a program that is specified not to be deleted received from the system controller 703, which will be described later, the recording/reproducing controller 701 stores (archives) the content data of the program indicated by the control signal in the PVR 702. The PVR 702 is a recorder such as HDD from which content data is not deleted. When archiving content data in the PVR 702, the recording/reproducing controller 701 adds the identification information described above to the content data.

The system controller 703 performs predetermined processing on content data, and receives input selecting a program to be archived, i.e., a program not to be deleted, through the remote controller 200. In response to the input, the system controller 703 outputs a control signal indicating the program to the recording/reproducing controller 701.

More specifically, when receiving input through the remote controller 200 that selects from a program guide EPG information indicating a program recorded during a time period before the current time, the system controller 703 regards the program as one to be archived (or to be reproduced). On the other hand, when receiving input that selects EPG information indicating a program to be recorded during a time period after the current time, the system controller 703 regards the program as one to be archived.

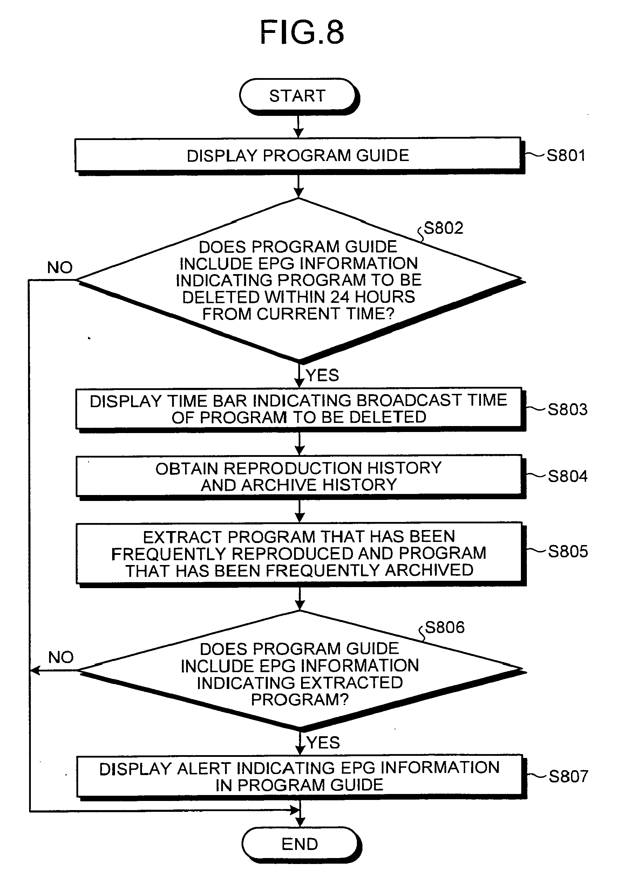

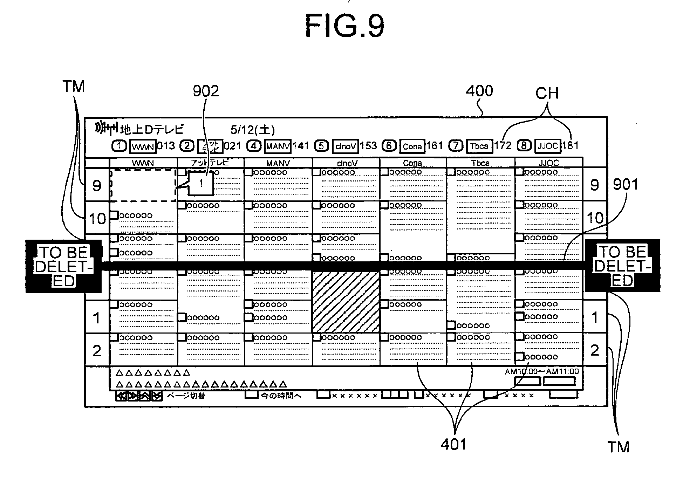

With reference to FIGS. 7, 8 and 9, a description will be given of a specific functional configuration of the system controller 703 and a processing information display process performed by the system controller 703. FIG. 8 is a flowchart of the processing information display process. FIG. 9 illustrates an example of the processing information displayed on the television.

The system controller 703 that performs the processing information display process comprises a processing information display module 703a. Incidentally, the processing information display module 703a may be provided independently of the system controller 703.

When the EPG processor 112 displays a program guide on the television (S801), the processing information display module 703a determines whether the program guide displayed on the television includes EPG information indicating a program content data of which is to be deleted within 24 hours from the current time based on the recording date contained in the identification information added to content data recorded on the recorder 111 (S802). If the program guide does not include EPG information indicating a program content data of which is to be deleted, the processing information display process ends.

If the program guide displayed on the television includes EPG information indicating a program content data of which is to be deleted (Yes at S802), the processing information display module 703a sends data on a time bar 901 to the on-screen display module 115 to display the time bar 901 on the television (S803). As illustrated in FIG. 9, the time bar 901 is displayed above the EPG information indicating the program to be deleted within 24 hours (indicated by diagonal lines) and EPG information for programs of other channels broadcast during the same time period as the to-be-deleted program. The time bar 901 indicates the broadcast time of the program to be deleted or the time period of the EPG information.

Thereafter, the processing information display module 703a obtains the title of a program and the reproduction history contained in the identification information added to each content data stored in the recorder 111 as well as archive history, which corresponds to the title of a program contained in the identification information added to content data stored in the PVR 702 (S804). Then, from the reproduction history and the archive history, the processing information display module 703a extracts the title of a program that has been frequently reproduced and the title of a program that has been frequently archived (S805).

After that, the processing information display module 703a determines that the program guide displayed on the television includes EPG information indicating a program specified by the extracted title (S806). If the processing information display module 703a determines that the program guide does not include EPG information indicating such a program (No at S806), the processing information display process ends.

On the other hand, if determining that the program guide includes EPG information indicating a program specified by the extracted title (Yes at S806), the processing information display module 703a sends data on an alert 902 to the on-screen display module 115 to display the alert 902 on the television (S807). As illustrated in FIG. 9, the alert 902 is displayed adjacent to the EPG information indicating the program to warn the user not to delete the content data of his/her favorite program.

While, in the second embodiment, the time bar 901 and the alert 902 are displayed as the processing information, the processing information is not limited to them, and it may be displayed in any manner or may be any item that can be displayed with EPG information indicating a program to be deleted. For example, a field, in which is displayed EPG information that indicates a program to be deleted, may be displayed in a different color from other fields.

As described above, according to the second embodiment, the time bar 901 is displayed above EPG information indicating a program to be deleted and EPG information for programs of other channels broadcast during the same time period as the to-be-deleted program. The time bar 901 indicates the broadcast time of the program to be deleted or the time period of the EPG information. In addition, the alert 902 is displayed to warn the user not to delete the content data of his/her favorite program. Thus, the EPG information indicating the program to be deleted is displayed so that it can be distinguished from EPG information indicating other programs. As a result, the information on processing related to deletion of content data, such as to notify the user of a program to be deleted, can be easily obtained from the program guide 400.

A modification of the second embodiment will be described. According to the modification, a multi-channel receiver of the modification displays processing information with EPG information indicating a program that has already been archived or that is specified to be archived. The multi-channel receiver of the modification is of basically similar configuration and operates in a similar manner to that of the second embodiment, and therefore, the description will not be repeated.

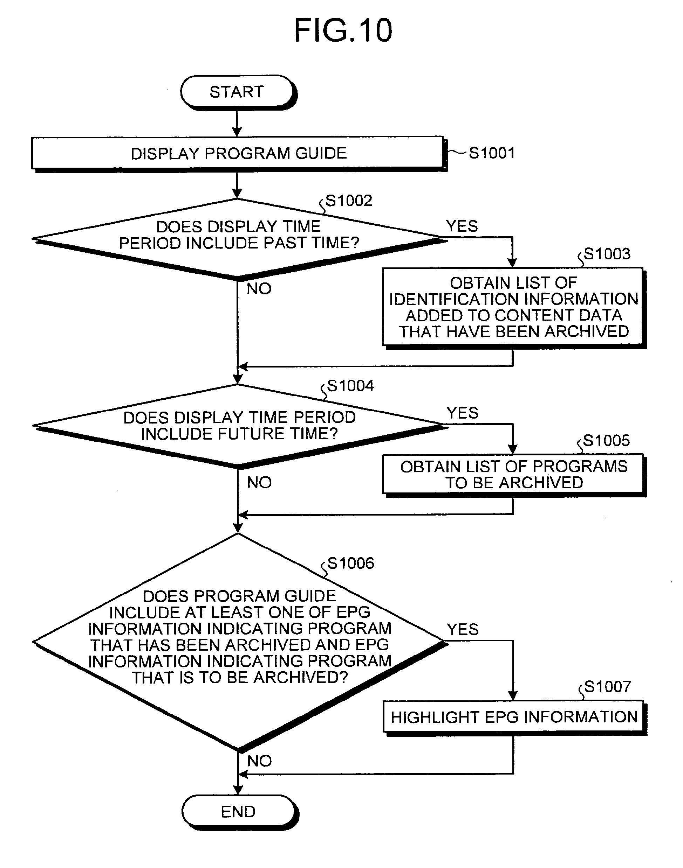

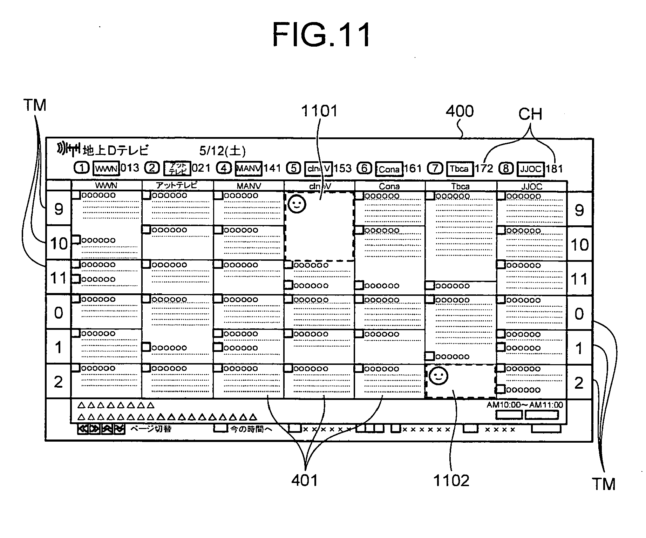

With reference to FIGS. 10 and 11, a description will be given of a processing information display process performed by the system controller 703 of the modification. FIG. 10 is a flowchart of the processing information display process according to the modification. FIG. 11 illustrates an example of the processing information displayed on the television.

When the EPG processor 112 displays a program guide on the television (S1001), the processing information display module 703a determines whether the display time period of the program guide displayed on the television includes the past time (S1002). If determining that the display time period includes the past time (Yes at S1002), the processing information display module 703a obtains a list of identification information (program titles) added to content data that have been archived before (S1003).

On the other hand, if determining that the display time period does not include the past time (No at S1002) or after obtaining the list of identification information (S1003), the processing information display module 703a determines whether the display time period includes the future time (S1004). If determining that the display time period includes the future time (Yes at S1004), the processing information display module 703a obtains a list of programs specified to be archived (S1005).

Thereafter, the processing information display module 703a determines whether the program guide displayed on the television includes at least either one of EPG information indicating a program that has been archived and EPG information indicating a program that is to be archived (a program specified to be archived) with reference to the list of programs obtained at S1005 (S1006). If determining that the program guide includes at least either one of EPG information indicating a program that has been archived and EPG information indicating a program that is to be archived (Yes at S1006), the processing information display module 703a sends data on colors in which fields 1101 and 1102 are to be displayed to the on-screen display module 115 so that the fields 1101 and 1102 are highlighted (S1107) as illustrated in FIG. 11. In the field 1101 is displayed EPG information indicating a program that has been archived, while in the field 1102 is displayed EPG information indicating a program that is to be archived.

If the processing information display module 703a determines that the program guide includes neither EPG information indicating a program that has been archived nor EPG information indicating a program that is to be archived (No at S1006), the processing information display process ends.

As described above, according to the modification, the multi-channel receiver displays the field 1101 for EPG information indicating a program that has been archived and the field 1102 for EPG information indicating a program that is to be archived in different colors from other fields. Thus, EPG information indicating a program that has been archived (EPG information indicating a program that is to be archived) is displayed in such a manner that it can be distinguished from EPG information indicating other programs. As a result, the information on processing related to archive, such as to clarify a program that has been archived (a program that is to be archived), can be easily obtained from the program guide 400.

The multi-channel receiver of the above embodiments and modifications thereof may be implemented as software. In other words, a computer program (hereinafter, "processing information display program") may be executed on a computer to realize the same function as the multi-channel receiver. The processing information display program may be provided as being stored in advance in ROM or the like. The processing information display program may also be provided as being stored in a computer-readable storage medium as a file in an installable or executable format. Examples of such a computer-readable storage medium include a compact disk read-only memory (CD-ROM), a flexible disk (FD), a compact disk recordable (CD-R), and a digital versatile disk (DVD).

Further, the processing information display program may be stored in a computer connected via a network such as the Internet and downloaded therefrom via the network. Still further, the processing information display program may be distributed via a network such as the Internet.

The processing information display program includes modules that implement the modules described above (the processing information display module 117a, 703a, etc.), respectively. As hardware, CPU (a processor) loads the processing information display program from the ROM into a main memory and executes it. Thus, the above modules (the processing information display module 117a, 703a, etc.) are implemented on the main memory.

The various modules of the systems described herein can be implemented as software applications, hardware and/or software modules, or components on one or more computers, such as servers. While the various modules are illustrated separately, they may share some or all of the same underlying logic or code.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A recorder (100; 700) comprising:
a program display module (112) configured to display a program guide that provides program information indicating programs from multiple channels broadcast during respective time periods, content data of which can be simultaneously recorded, the content data of the programs being received through a plurality of tuners (102, 103, 104, 110), pieces of the program information being arranged in time series with respect to each of the channel in the program guide;
a processing module (118; 701) configured to perform predetermined processing on the content data of the programs; and
an information display module (117a; 703a) configured to display processing information related to the predetermined processing when the program guide displayed by the program display module (112) includes at least one of first program information indicating a program on which the processing module (118; 701) is performing the predetermined processing and second program information indicating a program on which the processing module (118; 701) has performed the predetermined processing, the processing information being displayed correspondingly to at least one of the first program information and the second program information in the program guide.

2. The recorder (100; 700) of Claim 1, wherein the information display module (117a; 703a) is configured to display a time bar as the processing information above at least one of the first program information and the second program information, and program information indicating a program from another channel broadcast during broadcast time of the program indicated by at least one of the first program information and the second program information.

3. The recorder (100) of Claim 1, wherein
the processing module (118) is configured to reproduce recorded content data, and
when the program guide includes at least one of program information indicating a program being reproduced and program information indicating a program having been reproduced, the information display module (117a) displays the processing information related to reproduction of the program correspondingly to the program information.

4. The recorder (700) of Claim 1, wherein
the processing module (701) is configured to delete recorded content data from a first storage module (111) configured to store recorded content data when the first storage module (111) runs short of available memory capacity, and
when the program guide includes program information indicating a program to be deleted, the information display module (703a) displays the processing information related to deletion of the program correspondingly to the program information.

5. The recorder (700) of Claim 4, wherein
the processing module (701) is configured to receive selection of a program not to be deleted, and
when the program guide includes program information indicating a program selected not to be deleted, the information display module (703a) displays the processing information related to the selection of the program correspondingly to the program information.

6. The recorder (700) of Claim 5, wherein
the processing module (701) is configured to store content data of the program selected not to be deleted in a second storage module (702) from which content data is not deleted, and
when the program guide includes program information indicating a program that has been stored in the second storage module (702), the information display module (703a) displays the processing information related to storage of the program correspondingly to the program information.

7. A recorder (100; 700) comprising:
a program display module (112) configured to display a program guide that provides program information indicating programs from multiple channels broadcast during respective time periods, content data of which can be simultaneously recorded, the content data of the programs being received through a plurality of tuners (102, 103, 104, 110), pieces of the program information being arranged in time series with respect to each of the channel in the program guide; and
an information display module (117a; 703a) configured to display processing information related to predetermined processing when the program guide displayed by the program display module (112) includes at least one of first program information indicating a program on which the predetermined processing is being performed and second program information indicating a program on which the predetermined processing has been performed, the processing information being displayed correspondingly to at least one of the first program information and the second program information in the program guide.

8. A recording method comprising:
a program display module displaying a program guide that provides program information indicating programs from multiple channels broadcast during respective time periods, content data of which can be simultaneously recorded, the content data of the programs being received through a plurality of tuners, pieces of the program information being arranged in time series with respect to each of the channel in the program guide;
a processing module performing predetermined processing on the content data of the programs; and
an information display module displaying processing information related to the predetermined processing when the program guide displayed by the program display module includes at least one of first program information indicating a program on which the processing module is performing the predetermined processing and second program information indicating a program on which the processing module has performed the predetermined processing, the processing information being displayed correspondingly to at least one of the first program information and the second program information in the program guide.
